Europäisches Patentamt

European Patent Office

Office européen des brevets

(11) Veröffentlichungsnummer: **0 308 687**
A1

# EUROPÄISCHE PATENTANMELDUNG

(21) Anmeldenummer: 88114032.1

(22) Anmeldetag: 29.08.88

(51) Int. Cl.⁴: **B44C 5/04** , **B44C 3/08** , **B44F 5/00**

(30) Priorität: 08.09.87 DE 3730051

(43) Veröffentlichungstag der Anmeldung:
29.03.89 Patentblatt 89/13

(84) Benannte Vertragsstaaten:
DE GB IT SE

(71) Anmelder: **Th. Goldschmidt AG**
**Goldschmidtstrasse 100 Postfach 101461**
**D-4300 Essen 1(DE)**

(72) Erfinder: **Schäfer, Werner**
**Erftstrasse 94**
**D-4300 Essen-Kettwig(DE)**
Erfinder: **Scheiba, Manfred**
**Breddestrasse 15**
**D-4300 Essen 1(DE)**

(54) **Verfahren zur dekorativen Beschichtung von flächigen Werkstoffen unter Erzielung eines marmorierten Effektdekors sowie kunstharzbeschichtete Trägerbahn zur Durchführung des Verfahrens.**

(57) Eine mit Kunstharz beschichtete, für den Transferdruck geeignete Trägerbahn wird bei erhöhten Temperaturen auf den zu beschichtenden Untergrund aufgepresst, wobei das Kunstharz auf die zu beschichtende Oberfläche übertragen und danach die Trägerbahn von dem beschichteten Werkstoff abgezogen wird, wobei man

a) eine Trägerbahn verwendet, welche zwei übereinander liegende Schichten eines transparenten, thermoplastischen oder duroplastischen und unter Verpressungsbedingungen gut fließfähigen Kunstharzes aufweist, wobei die äußere Kunstharzschicht ein schuppenförmiges (blättchenförmiges) Pigment in einer Menge von 2 bis 40 Gew.-%, bezogen auf Kunstharz, enthält und die auf der Oberfläche der Trägerbahn aufliegende Kunstharzschicht frei von derartigen Pigmenten ist und

b) die Verpressung mit einem Preßwerkzeug durchführt, welches keine Oberflächenprofilierung aufweist.

Die beschichteten Werkstoffe weisen eine marmorierte Oberfläche auf und eignen sich besonders zur Herstellung von Türen, Möbeln, Tischplatten, Fassadenelementen, Ausstellungsständen oder zur Ausgestaltung von Räumen, wie Foyers, Warteräumen oder Schalterräumen.

## Verfahren zur dekorativen Beschichtung von flächigen Werkstoffen unter Erzielung eines marmorierten Effektdekors sowie kunstharzbeschichtete Trägerbahn zur Durchführung des Verfahrens

Die Erfindung betrifft ein Verfahren zur dekorativen Beschichtung von flächigen Werkstoffen, insbesondere Schichtpreßstoffen oder Holzwerkstoffplatten, unter Erzielung eines marmorierten Effektdekors, durch Aufpressen einer mit Kunstharz beschichteten, für den Transferdruck geeigneten Trägerbahn bei erhöhten Temperaturen auf den zu beschichtenden Untergrund, wobei das Kunstharz auf die zu beschichtende Oberfläche übertragen und danach die Trägerbahn von dem beschichteten Werkstoff abgezogen wird, sowie eine kunstharzbeschichtete, für den Transferdruck geeignete Trägerbahn zur Durchführung des Verfahrens.

Entsprechend dem Stand der Technik werden in großem Umfang Holzwerkstoffplatten, wie z.B. Spanplatten, Faserplatten, Sperrholzplatten, Tischlerplatten, Platten aus Celluloseabfällen oder Laminate aus einer Mehrzahl von Lagen Harz enthaltender Kernpapiere mit dekorativen Trägerbahnen vergütet, die meist mit bei erhöhten Temperaturen härtbaren Aminoplastharzen imprägniert und mit härtbaren oder thermoplastischen Kondensations- oder Polymerisationsharzen beschichtet sind. Man erhält Produkte mit besonders günstigen Gebrauchseigenschaften, wenn man zur Imprägnierung Melamin-Formaldehyd-Vorkondensate und zur Beschichtung härtbare Polymerisationsharze, wie Copolymerisate auf (Meth)acrylsäureesterbasis oder ungesättigte Polyesterharze verwendet. Dieser Stand der Technik ist z.B. in der DE-C-2 734 669 und der DE-C-3 403 691 näher beschrieben.

Die Vergütung der flächigen Träger, z.B. einer Spanplatte, mit der Kunstharz aufweisenden Trägerbahn kann dadurch erfolgen, daß man in einer Heizpresse bei Temperaturen von etwa 130 bis 180°C und einem Druck von etwa 0,3 bis 10 N/mm² die dekorative, beharzte Trägerbahn auf den Träger unter Verwendung eines Preßbleches aufpreßt. Die Harzdeckschicht nimmt dabei einen der Oberfläche des Preßbleches entsprechenden Glanzgrad an. Es ist auch möglich, die beharzten Trägerbahnen für sich auszuhärten und sie dann auf die Trägerbahnen, gegebenenfalls unter Einsatz von Leimpressen, aufzukleben. Bei Laminaten, die aus mehreren Lagen mit härtbaren Harzen imprägnierten Kernpapieren bestehen, kann man die Bildung des Laminates durch Verpressen der Kernpapiere unter Aushärtung der Imprägnierharze und die Oberflächenvergütung in einem Arbeitsgang gleichzeitg vornehmen.

Ähnlich wie die Vergütung der Holzwerkstoffplatten kann die Vergütung von Zementfaserplatten oder Gipskartonplatten erfolgen. Man kann auch in Leichtbauweise gefertigte flächige Bauteile, z.B.

Platten in Wabenstruktur, die gegebenenfalls mit Metallfolie, wie Aluminiumfolie, abgedeckt sind, vergüten.

Eine weitere Möglichkeit der Vergütung von insbesondere bereits beschichteten flächigen Werkstoffen besteht darin, daß man auf diese mittels des Transferverfahrens eine Oberflächenschicht aus Kunstharz aufbringt. Hierzu wird eine abhäsive Trägerbahn mit dem Kunstharz beschichtet, welches auf den zu vergütenden Werkstoff übertragen werden soll. Die beschichtete Trägerbahn wird auf den flächigen Werkstoff aufgepreßt, wobei sich die Oberfläche des flächigen Werkstoffes mit der Kunstharzschicht verbindet. Die Trägerbahn wird nach dem Transfer der Kunstharzschicht abgezogen. Die Kunstharzschicht bildet nun die äußere Oberfläche des vergüteten Werkstoffes. Es ist auch möglich, die Herstellung des flächigen Werkstoffes und die Oberflächenbeschichtung gleichzeitig vorzunehmen. Hierzu wird auf und gegebenenfalls zusätzlich unter das in üblicher Weise aufgebaute und den späteren flächigen Werkstoff ergebende Preßpaket zusätzlich eine kunstharzbeschichtete Transferträgerbahn gelegt. Die Vergütung der Oberfläche erfolgt gleichzeitig mit der Formgebung des Werkstoffes durch Verpressen des Preßpaketes in einer beheizten Presse.

Das die Oberflächenschicht der Transferträgerbahn bildende Kunstharz kann pigmentiert oder unpigmentiert sein. Enthält das Kunstharz kein Pigment, scheint das Dekor und/oder die Farbe des Untergrundes des vergüteten flächigen Werkstoffes durch die Oberflächenschicht. Durch Pigmentierung oder Einfärbung der Kunstharzschicht der Transferträgerbahn ist die Möglichkeit der zusätzlichen dekorativen Gestaltung der Oberfläche gegeben. Die im Transferverfahren aufgebrachte Kunstharzschicht hat in diesem Falle nicht nur die Aufgabe, auf dem vergüteten Werkstoff eine mechanisch und chemisch resistente Oberfläche auszubilden, sondern zusätzlich eine dekorative Funktion.

Es ist auch möglich, die Oberflächenschicht des vergüteten Werkstoffes mit einer Struktur zu versehen. Dabei erfolgt die Strukturierung beim Verpressen durch Verwendung eines Preßwerkzeugs mit reliefartiger Oberfläche, deren Struktur auf der Vergütungsschicht in Negativ-Form wiedergegeben wird. Bei ausgeprägter, tiefer Profilierung und Verwendung von unterschiedlich eingefärbten Kunstharzschichten können besondere Farbeffekte erzielt werden, indem bei der Verpressung die dem Preßwerkzeug zugewendete eingefärbte erste Kunstharzschicht von den erhabenen Stellen des Preßwerkzeuges weggedrückt wird und zu den Stellen geringeren Druckes abfließt. Man erkennt dann entsprechend den erhabenen Stellen des Profils des Preßwerkzeuges die Farbe der zweiten Harzschicht und/oder die Farbe des Untergrundes.

Die vorliegende Erfindung betrifft ein Verfahren zur dekorativen Beschichtung von flächigen Werkstoffen unter Anwendung der Transfertechnik.

Der Erfindung liegt insbesondere die Aufgabe zugrunde, mittels der Transfertechnik auf der Oberfläche von flächigen Werkstoffen, insbesondere Holzwerkstoffen, Oberflächenschichten aus Kunstharz auszubilden, die bei gutem Oberflächenschutz besondere dekorative Effekte in der Art einer Marmorierung zeigen. Unter marmoriertem Effektdekor ist dabei eine ungleichmäßige Verteilung des farbgebundenen Mediums in der Oberflächenschicht der (des) Kunstharze(s) zu verstehen, die eine gewisse Ähnlichkeit mit der Farbverteilung in Marmor aufweist.

Die Lösung dieser Aufgabe gelingt entsprechend einem Gegenstand der Erfindung in der Weise, daß man

a) eine Trägerbahn verwendet, welche zwei übereinander liegende Schichten eines transparenten, thermoplastischen oder duroplastischen und unter Verpressungsbedingungen gut fließfähigen Kunstharzes aufweist, wobei die äußere Kunstharzschicht ein schuppenförmiges (blättchenförmiges) Pigment in einer Menge von 2 bis 40 Gew.-%, bezogen auf Kunstharz, enthält und die auf der Oberfläche der Trägerbahn aufliegende Kunstharzschicht frei von derartigen Pigmenten ist und

b) die Verpressung mit einem Preßwerkzeug durchführt, welches keine Oberflächenprofilierung aufweist.

Unter dem Begriff des schuppenförmigen (blättchenförmigen) Pigmentes wird erfindungsgemäß dabei ein flächiges Pigment sehr geringer Schichtdicke verstanden. Die Teilchengröße des Pigmentes beträgt vorzugsweise 5 bis 100 μm. Hierunter ist die flächige Ausdehnung des Pigmentes zu verstehen. Die Schichtdicke des Pigmentes ist dabei wesentlich geringer und ist in der Regel kleiner als 1 μm.

Beim erfindungsgemäßen Verfahren wird vorzugsweise eine Kunstharz enthaltende Trägerbahn verwendet, bei der das schuppenförmige (blättchenförmige) Pigment in der der Trägerbahn zugewendeten Kunstharzschicht vorzugsweise in einer Menge von 5 bis 20 Gew.-%, bezogen auf das Kunstharz, enthalten ist.

Derartige schuppenförmige (blättchenförmige) Pigmente sind dem Fachmann bekannt. Ein besonders geeignetes und deshalb bevorzugtes Pigment der gewünschten räumlichen Gestalt ist Glimmer, welcher oberflächlich mit Metalloxiden, vorzugsweise Titandioxid oder Eisenoxid, beaufschlagt ist.

Hierbei handelt es sich um Perlglanzpigmente, welche der erfindungsgemäßen Trägerbahn einen Metalleffekt verleihen. Solche Pigmente sind im Handel unter der Bezeichnung Iriodin®-Pigmente erhältlich.

Ein anderes Beispiel schuppenförmiger (blättchenförmiger) Pigmente sind die aus Metallen oder Metallegierungen durch Auswalzen und Zerkleinern erhältlichen Metallpigmente. Zur Herstellung dieser Pigmente werden bevorzugt duktile Metalle oder Legierungen, vorzugsweise Aluminium, Kupfer und Silber, und als Legierungen Messing- und Bronzelegierungen verwendet.

Besondere farbliche Metalleffekte ergeben sich, wenn die Metalloberflächen, insbesondere die Oberflächen von Aluminiumpigmenten, mit Metalloxiden, vorzugsweise Eisenoxiden, beaufschlagt sind. Zum Stand der Technik wird auf die Veröffentlichungen "Eisenoxidbeschichtete Aluminiumpigmente" und "Optische Eigenschaften von Perlglanzpigmenten" in der Zeitschrift "farbe + lack" (1987) Seiten 973 bis 979 hingewiesen.

Das Kunstharz kann zusätzlich mit einem im Kunstharz löslichen Farbstoff eingefärbt sein. Dabei ist es auch zur Erzielung besonderer Farbeffekte möglich, nur das zur Herstellung der pigmentfreien, der Trägerbahn anliegenden Schicht verwendete Kunstharz einzufärben.

Vorzugsweise besteht die Trägerbahn selbst aus einer unter Verpressungsbedingungen nicht schmelzenden Folie oder einem gegenüber der Kunstharzschicht abhäsiv ausgerüsteten Papier.

Wird eine derartige erfindungsgemäße Trägerbahn bei erhöhten Temperaturen auf einen flächigen Werkstoff aufgepreßt, fließt das die beiden Oberflächenschichten bildende Kunstharz und härtet, falls es duroplastisch ist, aus. Das Kunstharz nimmt dabei die Oberflächenstruktur der Transferträgerbahn an. Der Fließvorgang des Kunstharzes beim Verpressen wird zusätzlich durch die Unebenheiten und Dichteunterschiede des zu vergütenden Untergrundes beeinflußt. Dies hat eine ungleichmäßige Verteilung des schuppenförmigen (blättchenförmigen) Pigmentes in der Kunstharzschicht zur Folge, da sich das Pigment beim Fließen des Harzes aufgrund seiner plättchenförmigen Gestalt in Fließrichtung orientiert. Hierdurch werden die Fließstrukturen wiedergegeben. Dieser Effekt wird insbesondere dadurch verstärkt und erkennbar, daß die der Transferträgerbahn zugewendete Kunstharzschicht pigmentfrei ist und somit infolge des Verdünnungseffektes den Fluß des Harzes quantitativ verstärkt. Hierdurch wird die Orientierung der Pigmentteilchen weiter gefördert.

Die nach der Verpressung erhaltene Oberfläche zeigt ein Dekorbild, das eine ausgeprägte Marmorierung durch die ungleichmäßige Verteilung des Pigmentes aufweist.

Entsprechend dem Merkmal b) des erfindungsgemäßen Verfahrens erfolgt die Verpressung unter Verwendung eines Preßwerkzeuges, welches keine Oberflächenprofilierung aufweist. Ein Profilierung des Preßwerkzeuges, wie sie in der DE-A-2 650 560 beschrieben ist, würde den freien Fluß der Harze zu Bereichen geringerer Dichte behindern und damit die Ausrichtung der schuppenförmigen Pigmente in der Fließrichtung beeinträchtigen. Es wird hieraus aber auch verständlich, daß eine gewisse Rauhtiefe der Oberfläche des Preßwerkzeuges erlaubt ist, solange der freie Fluß des Harzes nicht behindert wird.

Darüber hinaus kann das unterschiedliche Fließen des Beschichtungsharzes auch dadurch bewirkt oder verstärkt werden, daß man in dem zu vergütenden Werkstoff gezielt Unebenheiten der Oberfläche erzeugt. Dies kann z.B. dadurch geschehen, daß man unter der beharzten Trägerbahn, welche die Oberflächenschicht des zu vergütenden Werkstoffes bildet, gegebenenfalls geometrisch geformte Teilstücke einer beharzten Trägerbahn regelmäßig oder unregelmäßig anordnet. Diese Teilstücke werden z.B. unter Ausbildung eines Flächenmusters eingelegt. Derartige Teilstücke können eine beliebige geometrische Gestalt haben und z.B. symmetrisch oder unregelmäßig ausgebildet sein. Die Teilstücke können die Form eines Laubblattes haben. Man kann auch getrocknete und gegebenenfalls mit Harz imprägnierte natürliche Blätter, wie etwa Eichenlaub, einlegen, wobei die Oberflächenstrukturen der Blätter deutlich hervortreten. Die eingelegten Teilstücke heben sich von dem umgebenden Untergrund in Farbe und Marmorierung deutlich ab.

Dieser Marmorierungseffekt wird farblich besonders hervorgehoben, wenn der durch das erfindungsgemäße Verfahren zu vergütende Werkstoff an der Oberfläche eine uni transparent eingefärbte Schicht aufweist, deren Farbe mit der Eigenfarbe des Pigmentes kontrastiert. So kann man mit gutem Effekt bei einer z.B. blau eingefärbten Trägerbahn Perlglanzpigmente mit Gold- oder Kupferfarbe verwenden.

Derartige oberflächenvergütete flächige Werkstoffe verbinden gute Gebrauchseigenschaften der Oberflächen (Abriebfestigkeit, Kratzfestigkeit, Resistenz gegen Lösungsmittel) mit dekorativer, ästhetisch ansprechender Wirkung. Die vergüteten flächigen Werkstoffe werden deshalb bevorzugt zur Herstellung von Gegenständen mit dekorativen Flächen, wie Türen, Möbeln, Tischplatten, Fassadenelementen, Ausstellungsständen, oder zur Ausgestaltung von Räumen, wie Foyers, Warteräumen, Schalterräumen u.a., eingesetzt.

Es sind zwar aus dem Stand der Technik Lackfilme bekannt, die aus zwei Schichten bestehen, von denen die untere Schicht glimmerartige Pigmente enthält, während die obere Schicht (Deckschicht) pigmentfrei ist. Solche z.B. in der Autoindustrie bei der Herstellung von Metalleffektlacken bekannten Lackierungen, die u.a. in der DE-A-3 207 936 oder der DE-A-3 150 492 beschrieben sind, unterscheiden sich aber vom Gegenstand vorliegender Erfindung wesentlich dadurch, daß beim Aufbringen der Lackschichten auf den Untergrund kein Druck ausgeübt wird und die oben beschriebenen Fließvorgänge nicht stattfinden. Die Pigmente sind in der Lackschicht gleichmäßig verteilt. Ist der Gehalt an Pigmenten in der Lackschicht zu gering, tritt deshalb nur ein changierender Effekt (DE-A-3 150 492, Seite 6 unten) auf. Eine ungleiche Pigmentverteilung wäre auch in diesem Fall, z.B. bei der Lackierung eines Autobleches, höchst unerwünscht.

Die Erfindung umfaßt auch die bei dem erfindungsgemäßen Verfahren zu verwendende kunstharzbeschichtete und für den Transferdruck geeignete Trägerbahn, die dadurch gekennzeichnet ist, daß sie zwei übereinander liegende Schichten eines transparenten, thermoplastischen oder duroplastischen und unter Verpressungsbedingungen gut fließfähigen Kunstharzes aufweist, wobei die äußere Kunstharzschicht ein schuppenförmiges (blättchenförmiges) Pigment in einer Menge von 2 bis 40 Gew.-%, bezogen auf Kunstharz, enthält und die auf der Oberfläche der Trägerbahn aufliegende Kunstharzschicht frei von derartigen Pigmenten ist. Sinngemäß gelten hier die bereits genannten Angaben für die vorzugsweise einzusetzenden Pigmente.

Zur Herstellung der erfindungsgemäßen Oberflächenvergütungsfilme können als Beschichtungsharze die bekannten härtbaren duroplastischen oder nichtreaktiven thermoplastischen Harze verwendet werden. Geeignete härtbare Harze sind die härtbaren Polyesterharze auf Basis von Estern ungesättigter oder Mischungen gesättigter und ungesättigter Dicarbonsäuren in einem reaktiven Lösungsmittel, wie Styrol. Weitere geeignete Polyester sind z.B. in der DE-C-3 403 691 und DE-C-2 734 669 beschrieben. Als härtbare Beschichtungsharze sind auch härtbare Acrylat- oder Methacrylatharze oder Epoxidharze geeignet. Thermoplastische Beschichtungsharze können auf Basis von mit kurzkettigen, aliphatischen Alkoholen veretherten Melaminharzen aufgebaut sein. Weitere Beispiele geeigneter thermoplastischer Beschichtungsharze sind Polyesterharze oder Harze auf Acrylatbasis.

Als Trägerbahnen können Folien oder Papierbahnen verwendet werden. Diese flächigen Träger müssen aber gegenüber dem Beschichtungsharz, zumindest nach dem Vergütungsvorgang, abhäsive Eigenschaften aufweisen, damit sie von der vergüteten Oberfläche abgezogen werden können. Beispiele geeigneter Folien sind Metallfolien, wie z.B.

Aluminiumfolien, die im Regelfalle mit einem Trennlack versehen und rückseitig mit Papier verstärkt sind. Die Metallfolien haben eine Stärke von etwa 10 μm, das Rückseitenpapier ein Gewicht von 50 bis 100 g/m². Es sind ferner Kunststoffolien, wie z.B. Polypropylenfolien mit rückseitiger Papierverstärkung, geeignet. Die Polypropylenfolie hat zweckmäßig eine Dicke von 20 bis 50 μm, das Rückseitenpapier ein Gewicht von 80 bis 120 g/m².

Werden Papierbahnen als Trägerbahnen eingesetzt, müssen diese durch eine geeignete Beschichtung abhäsive Eigenschaften erhalten. Hierfür kommen insbesondere an sich bekannte Siliconharze, insbesondere strahlenhärtende Siliconharze, in Frage. Diese sind z.B. in der DE-C-3 426 087, DE-A-3 533 350 und DE-A-3 621 629 beschrieben.

In den folgenden Beispielen werden das erfindungsgemäße Verfahren, die Herstellung der erfindungsgemäßen mit Kunstharz beschichteten Trägerbahnen und ihre Verarbeitung noch näher erläutert.

### Beispiel 1

Als Trägerbahn wird ein Papier mit einem Gewicht von 120 g/m² mit abhäsiver Oberfläche verwendet.

Das Harz ist wie folgt zusammengesetzt:
Beschichtungsharz transparent:
310 g rieselfähiges ungesättigtes Polyesterharz
40 g Diallylphthalat-Prepolymer
35 g partiell veräthertes Melamin-Formaldehyd-Harz
284 g Dichlormethan
3 g p-Toluolsulfonsäure
13 g internes Trennmittel
2 g Benzoylperoxid-Paste
17 g Peroxidgemisch
Beschichtungsharz pigmentiert:
wie vorstehend, jedoch mit 50 g Iriodin®-Pigment Rotbraun 502, Teilchengröße 10 bis 60 μm, versehen.

Es werden 40 g/m² des transparenten Beschichtungsharzes mit einer Rakel auf die abhäsive Seite der Papierbahn aufgebracht. In einem Trockenkanal wird das Lösungsmittel bei 40 bis 80° C abgedunstet. Der Restlösemittelgehalt beträgt dann 8 bis 9 %. Mit einem zweiten Dosierwerk wird dann das pigmentierte Beschichtungsharz in gleicher Menge aufgetragen und in gleicher Weise getrocknet.

Zur Herstellung eines vergüteten Schichtpreßstoffes wird folgender Aufbau in eine Heizpresse eingebracht:
Preßpolster

Preßblech
erfindungsgemäß beschichtete Trägerbahn
melaminharz-imprägniertes schwarzes Dekorpapier:
Papiergewicht 80 g/m² Harzgehalt 80 g/m² Festharz
10 phenolharz-imprägnierte Kernfilme:
Papiergewicht 150 g/m² Harzgehalt 70 g/m² Festharz
Trennpapier
Preßblech
Preßpolster

Die Verpressung erfolgt in einer Etagenpresse bei einem Druck von 10 N/mm², einer Temperatur von 145° C und einer Preßzeit von 20 Minuten. Das Preßgut wird unter Druck rückgekühlt und der Presse entnommen. Die auf der Oberseite des Schichtpreßkörpers befindliche abhäsive Trägerbahn wird abgezogen.

Es wird ein Schichtpreßstoff mit kupferfarbener marmorierter Oberfläche erhalten, wobei der schwarze Melaminharzfilm teilweise als Untergrund durchscheinend zu erkennen ist.

### Beispiel 2

Als Trägerbahn wird eine mit Trennlack versehene 10 μm starke und rückseitig mit 60 g/m² Papier verstärkte Aluminiumfolie verwendet.

Als Beschichtungsharze werden verwendet:
Beschichtungsharz transparent:
100 g Melamin-Formaldehyd-Harz, mit Butanol veräthert, als 55 bis 60 gew.-%ige Lösung in einem Butanol/Xylol-Gemisch
1 g p-Toluolsulfonsäure, als 50 gew/-%ige Lösung in Methanol
Beschichtungsharz pigmentiert:
wie vorstehend, jedoch mit 3 g Iriodin®-Pigment Glitzerbronce 530, Teilchengröße 10 bis 100 μm, versehen.

Es werden 40 g/m² des transparenten Beschichtungsharzes auf die Trägerbahn aufgerakelt. Das Lösungsmittel wird in einem Trockenkanal bei 60 bis 110° C abgedunstet. Mit einem zweiten Auftrag werden 60 g des pigmentierten Harzes in gleicher Weise aufgebracht und das erhaltene Produkt getrocknet.

Zur Herstellung eines vergüteten Schichtpreßstoffes wird folgender Aufbau in eine Heizpresse eingebracht:
Preßpolster
Preßblech
erfindungsgemäß beschichtete Trägerbahn
melaminharz-imprägniertes dunkelbraunes Dekorpapier:
Papiergewicht 80 g/m² Harzgehalt 80 g/m² Festharz
50 phenolharz-imprägnierte Kernfilme:
Papiergewicht 150 g/m² Harzgehalt 70 g/m² Festharz
melaminharz-imprägniertes dunkelbraunes Dekorpapier:
Papiergewicht 80 g/m² Harzgehalt 80 g/m² Festharz
erfindungsgemäß beschichtete Trägerbahn
Preßblech
Preßpolster

Die Verpressung erfolgt in einer Etagenpresse bei einem Druck von 10 N/mm², einer Temperatur von 145°C und einer Preßzeit von 45 Minuten. Das Preßgut wird unter Druck rückgekühlt und dann der Presse entnommen. Die auf der Ober- und Unterseite des Schichtpreßstoffkörpers befindlichen abhäsiven Trägerbahnen werden abgezogen.

Es wird eine beidseitig vergütete Platte mit dekorativer Marmorierung erhalten. Die Oberfläche ist seidenglänzend.

### Beispiel 3

Als Trägerbahn wird eine mit Papier verstärkte Polypropylenfolie verwendet. Die Stärke der Polypropylenfolie beträgt 30 μm, das Gewicht des Rückseitenpapiers 100 g/m².

Als Beschichtungsharze werden verwendet:
Beschichtungsharz transparent:
100 g Diallylphthalat-Prepolymer
100 g Dichlormethan
3 g internes Trennmittel
0,5 g Benzoylperoxid-Paste
4 g Peroxid-Paste
Beschichtungsharz pigmentiert:
wie vorstehend, jedoch mit 10 g Iriodin®-Pigment Goldperl 300, Teilchengröße 10 bis 60 μm, versehen.

Die Herstellung der beschichteten Trägerbahn erfolgt wie in Beispiel 1 beschrieben.

Zur Herstellung einer oberflächenvergüteten Spanplatte wird folgender Aufbau verpreßt:
Preßpolster
Preßblech
erfindungsgemäß beschichtete Trägerbahn
melaminharz-imprägniertes grünes Dekorpapier:
Papiergewicht 80 g/m² Harzgehalt 80 g/m² Festharz
melaminharz-imprägnierter Barrierefilm:
Papiergewicht 120 g/m² Harzgehalt 150 g/m² Festharz
Spanplatte
melaminharz-imprägnierter Barrierefilm wie vorstehend
melaminharz-imprägniertes grünes Dekorpapier wie vorstehend
erfindungsgemäß beschichtete Trägerbahn
Preßblech
Preßpolster

Die Verpressung erfolgt in einer Etagenpresse bei einem Druck von 2 N/mm², einer Temperatur von 145°C und einer Preßzeit von 12 Minuten. Das Preßgut wird der Presse ohne Rückkühlung entnommen. Die abhäsiven, auf der Ober- und Unterseite befindlichen Trägerbahnen werden abgezogen. Die erhaltene, beidseitig vergütete Platte zeigt eine dekorative Marmorierung und ist z.B. für Innenausbauzwecke (Möbel, Stellwände, Messebau) besonders geeignet.

### Beispiel 4

Das Verfahren des Beispiels 1 wird wiederholt, jedoch werden dem transparenten Beschichtungsharz 4 g des lösungsmittellöslichen Farbstoffes Zaponblau zugegeben. Es ergibt sich eine Oberflächeneinfärbung mit der Marmorierung entsprechend unterschiedlicher Blaufärbung.

### Beispiel 5

Es wird eine Trägerbahn, wie in Beispiel 1 beschrieben, beschichtet. Als Beschichtungsharze werden verwendet:
Beschichtungsharz pigmentiert:
120 g Diallylphthalat-Prepolymer
80 g Dichlormethan
2,5 g internes Trennmittel
4 g Dicumylperoxid
4 g Aluminiumpaste
0,4 g Rußpaste
Beschichtungsharz transparent:
wie vorstehend, jedoch unpigmentiert

Die Herstellung der beschichteten Trägerbahn erfolgt analog Beispiel 1, die Herstellung einer oberflächenvergüteten Spanplatte analog Beispiel 3. Man erhält eine vergütete Platte, welche eine Silbermetallicmarmorierung aufweist und zur Herstellung dekorativer Flächen besonders geeignet ist.

**Ansprüche**

1. Verfahren zur dekorativen Beschichtung von flächigen Werkstoffen, insbesondere Schichtpreßstoffen oder Holzwerkstoffplatten, unter Erzielung eines marmorierten Effektdekors, durch Aufpressen einer mit Kunstharz beschichteten, für den Transferdruck geeigneten Trägerbahn bei erhöhten Temperaturen auf den zu beschichtenden Untergrund, wobei das Kunstharz auf die zu beschichtende Oberfläche übertragen und danach die Trägerbahn von dem beschichteten Werkstoff abgezogen wird, dadurch gekennzeichnet, daß man

a) eine Trägerbahn verwendet, welche zwei übereinander liegende Schichten eines transparenten, thermoplastischen oder duroplastischen und unter Verpressungsbedingungen gut fließfähigen Kunstharzes aufweist, wobei die äußere Kunstharzschicht ein schuppenförmiges (blättchenförmiges) Pigment in einer Menge von 2 bis 40 Gew.-%, bezogen auf Kunstharz, enthält und die auf der Oberfläche der Trägerbahn aufliegende Kunstharzschicht frei von derartigen Pigmenten ist und

b) die Verpressung mit einem Preßwerkzeug durchführt, welches keine Oberflächenprofilierung aufweist.

2. Verfahren nach Anspruch 1, dadurch gekennzeichnet, daß man eine Trägerbahn verwendet, deren äußere Schicht ein schuppenförmiges (blättchenförmiges) Pigment mit einer Teilchengröße von 5 bis 100 µm enthält.

3. Verfahren nach Anspruch 1 oder 2, dadurch gekennzeichnet, daß man eine Trägerbahn verwendet, deren äußere Kunstharzschicht das schuppenförmige (blättchenförmige) Pigment in einer Menge von 5 bis 20 Gew.-%, bezogen auf Kunstharz, enthält.

4. Verfahren nach einem oder mehreren der vorhergehenden Ansprüche, dadurch gekennzeichnet, daß man eine Trägerbahn verwendet, deren äußere Schicht als schuppenförmiges (blättchenförmiges) Pigment Glimmer, welcher mit Metalloxiden, vorzugsweise Titandioxid oder Eisenoxid, beaufschlagt ist, enthält.

5. Verfahren nach einem oder mehreren der vorhergehenden Ansprüche, dadurch gekennzeichnet, daß man eine Trägerbahn verwendet, deren äußere Schicht schuppenförmige (blättchenförmige) Pigmente aus Metallen oder Metallegierungen enthält.

6. Verfahren nach einem oder mehreren der vorhergehenden Ansprüche, dadurch gekennzeichnet, daß man eine Trägerbahn verwendet, deren äußere Schicht als schuppenförmiges (blättchenförmiges) Pigment mit Metalloxiden, vorzugsweise Eisenoxid, beschichtete Aluminiumpigmente enthält.

7. Verfahren nach einem oder mehreren der vorhergehenden Ansprüche, dadurch gekennzeichnet, daß man als Trägerbahn eine unter Verpressungsbedingungen nicht schmelzende Folie oder papier, welches gegenüber den aufgebrachten Kunstharzschichten abhäsiv ausgerüstet ist, verwendet.

8. Kunstharzbeschichtete, für den Transferdruck geeignete Trägerbahn zur Durchführung des Verfahrens nach einem oder mehreren der vorhergehenden Ansprüche, dadurch gekennzeichnet, daß sie zwei übereinander liegende Schichten eines transparenten, thermoplastischen oder duroplastischen und unter Verpressungsbedingungen gut fließfähigen Kunstharzes aufweist, wobei die äußere Kunstharzschicht ein schuppenförmiges (blättchenförmiges) Pigment in einer Menge von 2 bis 40 Gew.-%, bezogen auf Kunstharz, enthält und die auf der Oberfläche der Trägerbahn aufliegende Kunstharzschicht frei von derartigen Pigmenten ist.

9. Kunstharzbeschichtete Trägerbahn nach Anspruch 8, dadurch gekennzeichnet, daß deren äußere Schicht ein schuppenförmiges (blättchenförmiges) Pigment mit einer Teilchengröße von 5 bis 100 µm enthält.

10. Kunstharzbeschichtete Trägerbahn nach Anspruch 8 oder 9, dadurch gekennzeichnet, daß deren äußere Kunstharzschicht das schuppenförmige (blättchenförmige) Pigment in einer Menge von 5 bis 20 Gew.-%, bezogen auf Kunstharz, enthält.

11. Kunstharzbeschichtete Trägerbahn nach einem oder mehreren der vorhergehenden Ansprüche, dadurch gekennzeichnet, daß deren äußere Schicht als schuppenförmiges (blättchenförmiges) Pigment Glimmer, welcher mit Metalloxiden, vorzugsweise Titandioxid oder Eisenoxid, beaufschlagt ist, enthält.

12. Kunstharzbeschichtete Trägerbahn nach einem oder mehreren der vorhergehenden Ansprüche, dadurch gekennzeichnet, daß deren äußere Schicht schuppenförmige (blättchenförmige) Pigmente aus Metallen oder Metallegierungen enthält.

13. Kunstharzbeschichtete Trägerbahn nach einem oder mehreren der vorhergehenden Ansprüche, dadurch gekennzeichnet, daß deren äußere Schicht als schuppenförmiges (blättchenförmiges) Pigment mit Metalloxiden, vorzugsweise Eisenoxid, beschichtete Aluminiumpigmente enthält.

14. Kunstharzbeschichtete Trägerbahn nach einem oder mehreren der vorhergehenden Ansprüche, dadurch gekennzeichnet, daß die Trägerbahn eine unter Verpressungsbedingungen nicht schmelzende Folie oder Papier ist, welches gegenüber den aufgebrachten Kunstharzschichten abhäsiv ausgerüstet ist.

| Europäisches Patentamt | EUROPÄISCHER RECHERCHENBERICHT | Nummer der Anmeldung |
|---|---|---|

EP 88 11 4032

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,A | EP-A-0 266 109 (REXHAM CORP.) * Spalte 2, Zeile 10 - Spalte 3, Zeile 22 * --- | 1,5,8 | B 44 C 5/04 B 44 C 3/08 B 44 F 5/00 |
| A | FR-A-1 496 492 (J.P. BERTRAND) * Ansprüche 1,2 * --- | 1 | |
| D,A | DE-A-2 734 669 (GOLDSCHMIDT) * Seite 5, Zeilen 6-20 * ----- | 1 | |

| | | | RECHERCHIERTE SACHGEBIETE (Int. Cl.4) |
|---|---|---|---|
| | | | B 44 C B 44 F B 21 H |

Der vorliegende Recherchenbericht wurde für alle Patentansprüche erstellt

| Recherchenort | Abschlußdatum der Recherche | Prüfer |
|---|---|---|
| DEN HAAG | 23-12-1988 | MCCONNELL C.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................
& : Mitglied der gleichen Patentfamilie, übereinstimmendes Dokument

EPO FORM 1503 03.82 (P0403)